# EUROPÄISCHE PATENTSCHRIFT

(11) **EP 2 725 320 B1**
(45) Veröffentlichungstag und Bekanntmachung des Hinweises auf die Patenterteilung: **20.01.2016**
(21) Anmeldenummer: 12190146.6
(22) Anmeldetag: 26.10.2012
(51) Int. Cl.: G01B 11/24, G01B 21/04, G01B 21/20, B21B 38/04

(54) **Verfahren zur Bestimmung des Verdrehwinkels von in ihrer Längsrichtung vorbewegten Rundprofilen in einer Walzstrasse**
Method for determining the angle of rotation of a longitudinally moving round profile in a mill train
Procédé de détermination de l'angle de rotation d'un profilé rond en déplacement longitudinal dans un train de laminoir

(43) Veröffentlichungstag der Anmeldung: 30.04.2014
(73) Patentinhaber: Zumbach Electronic AG, 2552 Orpund (CH)
(72) Erfinder: Balemi, Silvano, 6598 Tenero (CH)
(74) Vertreter: Köster, Hajo

(56) Entgegenhaltungen:
- EP-A1- 1 978 329
- EP-A1- 2 338 025
- EP-A2- 1 126 235
- DE-A1- 3 703 493

## Beschreibung

Die Erfindung betrifft ein Verfahren zur Bestimmung des Verdrehwinkels von in ihrer Längsrichtung vorbewegten Rundprofilen in einer Walzstraße, die mit einer Anzahl von z Walzen pro Walzenblock ausgestattet ist, wobei z für 2, 3, 4, 5 oder 6 steht, bezüglich der x-Achse oder y-Achse dieser Walzstrasse, bei dem eine Kontur des Rundprofils berechnet wird.

In der Stahlindustrie werden sogenannte Langprodukte in spezialisierten Walzstraßen gewalzt, um die gewünschten Endprodukte zu erhalten.

Sollen diese Langprodukte zu Rundstäben gewalzt werden, dann werden sie meistens in einem 3-Walzen-Fertiggerüst mit mehreren Walzenblöcken (meistens ein 3-Walzen-Block) auf das Endmaß gewalzt und auf ein Kühlbett zum Abkühlen gefahren. Üblicherweise kommen vier Walzenblöcke mit jeweils drei Walzen zum Einsatz. Bei diesen Walzen handelt es sich üblicherweise um Walzenscheiben. Wenn im Rahmen der vorliegenden Unterlagen von Walzen die Rede ist, dann umfasst dieser Ausdruck somit auch derartige Walzenscheiben.

Die Mittelebenen der Walzenscheiben sind bei diesen 3-Walzenblöcken von einem zum nächsten Walzenblock um jeweils 60° verschwenkt sind. Bei derartigen 3-Walzenblöcken bezeichnet der Wert z somit die Zahl bzw. Anzahl 3.

Derartiger Stabstahl hat oft polygonale Formabweichungen von der Kreisform. Die vorwiegende Form bei 3-Walzenblöcken ist dabei "dreiwellige".

Allerdings existieren auch Walzenblöcke mit 2, 4, 5 oder sogar 6 Walzenscheiben bzw. Walzen. Die Zahl z steht in diesem Fall für die Zahl 2, 4, 5 oder 6. Die mit diesen Walzenblöcken erhaltenen Formabweichungen sind dann vorwiegend zwei-, vier-, fünf- oder sechswellig. Die bedeutet mit anderen Worten, die Formabweichung ist vorwiegend z-wellig.

Das Langprodukt ist somit nicht rund sondern unrund/wellig. Wenn der Durchmesser eines derartigen polygonen Stabstahls über den Umfang vermessen wird und alle ermittelten Durchmesser in etwa den selben Wert besitzen, spricht man von einem "Gleichdick".

Zur Messung von Gleichdickfehlern bzw. der Unrundheit von hier in Rede stehenden Rundprodukten bzw. Rundprofilen sind schon zahlreiche Verfahren und Messvorrichtungen beschrieben worden, bei denen Messeinrichtungen zum Einsatz kommen, die drei oder mehr Laserscanner aufweisen, die jeweils einen lichtempfindlichen Sensor und einen Laser besitzen.

Ein derartiges Verfahren ist beispielsweise beschrieben in der PCT/EP2008/002593 (WO2008/122385). Bei diesen bekannten Verfahren werden aus Schattenkanten eine tangential an das Rundprofil anliegende Gerade bzw. eine Tangente berechnet. Die Winkel der Geraden zueinander sind dabei bekannt. Die Laserscanner werden dabei derart angeordnet bzw. ausgewählt, dass von mindestens drei Schattenkanten ein Polygon erzeugt wird. Das zu vermessende Rundprofil liegt dann innerhalb der durch dieses Polygon aufgespannten Fläche.

Bei diesem bekannten Verfahren wird mit Hilfe eines Bezugskreises eine Kontur bzw. Gleichdickkontur ermittelt und berechnet. Bezüglich der Einzelheiten dieses bekannten Verfahrens wird auf die genannte Druckschrift verwiesen. Dort findet sich auf eine Diskussion der weiteren gattungsgemäßen Verfahren.

EP 1 978 329 A1 offennbart ein Verfahren zur Ermittlung der Unrundheit eines Langproduktes in einer Walzstraße, wobei eine Kontur des Rundprofils berechnet wird, und die Unrundheit aus dem Vergleich zwischen dieser Kontur und einem Bezugskreis ermittelt wird

Eine Weiterentwicklung dieses Verfahrens ist beschrieben in der PCT/EP2009/062862 (WO2010/037865 A1). Mit Hilfe dieser Verfahren ist es möglich, die sogenannte Unrundheit zu bestimmen und beispielsweise die typischen Werte GT und DT zu ermitteln, um anhand dieser Werte die einzelnen Gerüste einstellen zu können, insbesondere das letzte und vorletzte Gerüst. Diese Werte GT und DT stellen Werte für den Abstand vom Referenzpunkt zur Kontur und somit Längenangaben dar. Sie werden häufig auch als Durchmesser bezeichnet.

Der Wert DT bezieht sich auf den Druckpunkt des letzten Kalibers. Ist das letzte Kaliber aus drei Walzen aufgebaut, dann existieren drei Druckpunkte DT, die üblicherweise in einem Winkel von 120° zueinander angeordnet sind. Der Wert GT bezieht sich auf die Gap- oder Spaltzone, die zwischen zwei Walzen angeordnet ist. Bei einem Gerüst aus drei Walzen existieren somit drei Druckpunkte DT sowie drei Gapzonen GT. Sind die Walzen in einem Winkel von 120° und somit gleichmäßig verteilt angeordnet, dann sind auch die Gapzonen GT gleichmäßig verteilt und somit in einem Winkel von 120° angeordnet. Die Winkel zwischen GT und DT betragen 60°.

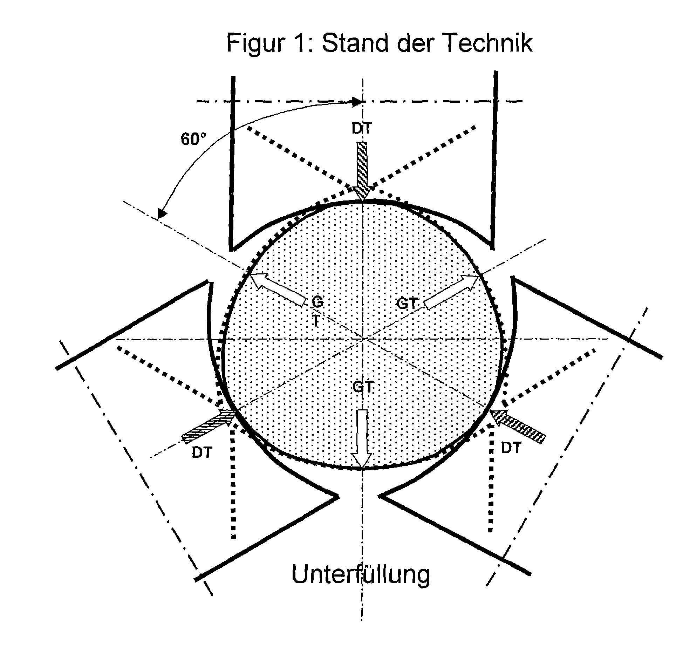

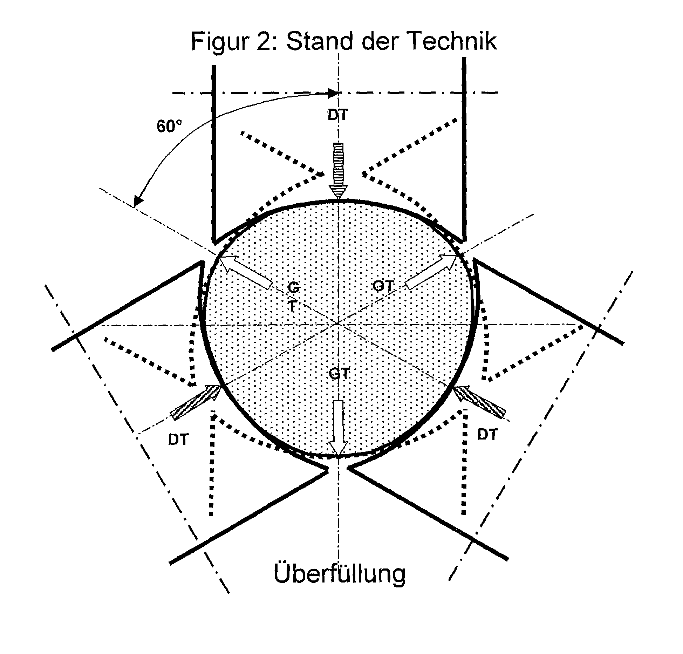

Eine derartige Situation ist in den Figuren 1 und 2 dargestellt; diese Figuren beziehen sich auf den Stand der Technik sowie auf den häufigsten Fall einer Walzstrasse mit drei Walzen pro Walzenblock (z = 3). In diesen Figuren sind die Walzen des letzten Gerüsts mit einer durchgezogenen Linie schematisch dargestellt, während die Walzen des vorletzten Gerüst mit einer gestrichelten Linie angedeutet sind.

Nachstehend wird primär aus Gründen der einfacheren Darstellbarkeit auf diesen häufigsten Fall abgestellt. Diese Ausführungen gelten jedoch stellvertretend für Walzstrassen mit 2, 4, 5 oder 6 Walzen pro Walzenblock (z = 2, 4, 5 oder 6).

Die Werte für GT und DT zeigen an, ob eine Unterfüllung oder eine Überfüllung vorliegt. Ist DT größer als GT, dann liegt eine Unterfüllung vor. Dies bedeutet, dass zu wenig Material in die Spaltzone gelangt, siehe Figur 1. Mit anderen Worten, der Druck des vorletzten Blocks ist zu groß oder der Druck des letzten Blocks ist zu klein.

Ist hingegen GT größer als DT, dann spricht man von einer Überfüllung, siehe Figur 2. Dies bedeutet, dass das vorletzte Kaliber bzw. der vorletzte Block zu weit geöffnet ist oder dass das letzte Kaliber bzw. der letzte Block zu eng ist. Mit anderen Worten, der Druck des vorletzten Kalibers ist zu klein oder der Druck des letzten Gerüsts ist zu groß.

Bezüglich weiterer Erläuterungen dieser Werte GT und DT wird auf die zuvor genannten Druckschriften verwiesen.

Die Walzen des vorletzten Blocks sind üblicherweise verdreht gegenüber den Walzen des letzten Blocks bzw. Kalibers angeordnet, und zwar derart, dass die DT-Winkellagen des vorletzten Kalibers in den GT-Winkellagen des letzten Kalibers liegen. Die GT-Winkellagen des vorletzten Kalibers liegen dann in den DT-Winkellagen des letzten Kalibers.

Die Walzen der Walzenblöcke bzw. Kaliber sollen nun derart eingestellt werden, dass ein möglichst rundes Produkt erhalten wird. In diesem Idealfall ist GT = DT. Ein Maschinenführer versucht daher, die Walzen der Blöcke, und zwar nicht nur des letzten Kalibers sondern auch, sofern möglich, des vorletzten Kalibers näher zum Rundprofil hin oder weiter davon weg zu verschieben, um dieses Ziel zu erreichen.

Ein Problem besteht allerdings darin, dass die zuvor geschilderten Messeinrichtungen nicht direkt nach dem letzten Walzengerüst bzw. Kaliber sondern bedingt durch die Bauart der Walzengerüste etc. in einem Abstand zum letzten Walzengerüst angeordnet sind. Auf dem Weg vom letzten Walzengerüst bis zur Messeinrichtung bzw. dem Messpunkt kann sich das gewalzte Rundprofil um seine Längsachse drehen. Dieser Winkel wird Verdrehwinkel genannt und ist für alle GT- und DT-Punkte in etwa der gleiche, da das Rundprofil insgesamt und somit alle GT- und DT-Punkte gleichermaßen verdreht werden.

Die Verdrehung wird von vielen Parametern beeinflusst und ist instabil sowie unberechenbar. Kann der Verdrehwinkel ermittelt werden, können dem Maschinenführer Informationen für mögliche Eingriffe in die Steuerung der Walzenanlage zur Verfügung gestellt werden.

Aufgabe der vorliegenden Erfindung ist es daher, den Verdrehwinkel zwischen dem letzten Walzenblock und der Messeinrichtung sowie insbesondere zusätzlich auch die GT- und DT-Werten zu bestimmen, und zwar insbesondere möglichst genau.

Gelöst wird diese Aufgabe durch ein Verfahren gemäß der Lehre der Ansprüche.

Das erfindungsgemäße Verfahren schließt sich somit an die Bestimmung einer Kontur eines vorbewegten Rundprofils an. Als Ausgangspunkt für das erfindungsgemäße Verfahren können dabei Konturpunkte oder auch eine die Kontur wiedergebende Kurve sein. Diese Konturpunkte bzw. Kurve können auf per se bekannte Weise erhalten werden.

Das erfindungsgemäße Verfahren ist dadurch gekennzeichnet, dass
i) sofern noch nicht geschehen, ein Referenzzentrum x₀, y₀ für die Kurve der Kontur festgelegt wird,
ii) nach der Oberwelle der z-fachen Kreisfrequenz für die Kurve der Kontur gesucht und diese Oberwelle bestimmt wird,
iii) in einem Winkelbereich, bezogen auf eine vorgegebene 0° Winkellage, wobei als vorgegebene 0° Winkellage die Winkellage einer der Walzen des letzten Kalibers bzw. Walzenblocks gewählt wird und wobei der Winkelbereich
   für die 2-fache Kreisfrequenz kleiner + 45° bis größer - 45°,
   für die 3-fache Kreisfrequenz kleiner + 30° bis größer - 30°,
   für die 4-fache Kreisfrequenz kleiner + 22,5° bis größer - 22,5°,
   für die 5-fache Kreisfrequenz kleiner + 18° bis größer - 18° und
   für die 6-fache Kreisfrequenz kleiner + 15° bis größer - 15° beträgt,
   nach einem Extremwert für die unter ii) berechnete Oberwelle gesucht wird und
iv) der Verdrehwinkel αₘₐₓ zwischen der Richtung vom Referenzzentrum zu dem Extremwert der Oberwelle und der 0° Winkellage berechnet wird.

Bei einem 2-Walzenblock steht z somit für die Zahl 2; es wird nach der Oberwelle mit der 2-fachen Kreisfrequenz in einem Winkelbereich von kleiner + 45° bis größer - 45° gesucht. Bei einem 3-Walzenblock steht z somit für die Zahl 3; es wird nach der Oberwelle mit der 3-fachen Kreisfrequenz in einem Winkelbereich von kleiner + 30° bis größer - 30° gesucht. Bei einem 4-Walzenblock steht z somit für die Zahl 4; es wird nach der Oberwelle mit der 4-fachen Kreisfrequenz in einem Winkelbereich von kleiner + 22,5° bis größer-22,5° gesucht. Bei einem 5-Walzenblock steht z somit für die Zahl 5; es wird nach der Oberwelle mit der 5-fachen Kreisfrequenz in einem Winkelbereich von kleiner + 18° bis größer - 18° gesucht. Bei einem 6-Walzenblock steht z somit für die Zahl 6; es wird nach der Oberwelle mit der 6-fachen Kreisfrequenz in einem Winkelbereich kleiner + 15° bis größer - 15° gesucht.

Sobald der Verdrehwinkel αₘₐₓ bestimmt ist, können auch die Werte DT und GT besser bestimmt werden, denn es ist dann ja bekannt, in welchem Winkel sich die entsprechenden Abweichungen vom Rundprofil an der Messstelle erstrecken.

Zur Berechnung der Oberwelle der z-fachen Kreisfrequenz können die Koordinaten der Punkte der Kontur oder die Kontur wiedergebenden Kurve im kartesischen Koordinatensystem oder im Polarkoordinatensystem verwendet werden. Ausgehend von diesen Daten wird die Berechnung nach bekannten mathematischen Methoden durchgeführt.

So kann man die Berechnung der Oberwelle direkt ausgehend von den x- und y-Koordinaten der Punkte der Kontur vornehmen, beispielsweise auch mit Hilfe der Methode der kleinsten Quadraten Abweichungen.

Ferner kann man die Oberwelle nach den Regeln der Fourieranalyse suchen und bestimmen. In diesem Fall wird zuvor eine Kurve berechnet, welche den Abstand der Kurve der Kontur vom Referenzzentrum, bezogen auf die 0° Winkellage, wiedergibt. Anschließend wird die Fourieranalyse durchgeführt.

Für die Berechnung der Oberwelle ist keine vollständige Fourieranalyse notwendig. Zum Beispiel kann die Berechnung auch mit Hilfe der Methode der kleinsten Quadraten Abweichungen erfolgen.

Nach einer bevorzugten Ausführungsform steht z für 3. Mit anderen Worten, das erfindungsgemäße Verfahren wird vorzugsweise bei einem 3-Walzenblock bzw. Kaliber eingesetzt.

Bei letzterer bevorzugten Ausführungsform beträgt der Winkelbereich/Suchbereich vorzugsweise + 20° bis - 20° und insbesondere + 15° bis - 15°.

Die für z = 3 angegebenen Winkelbereiche umfassen alle Einzelwerte und insbesondere alle engeren Winkelbereiche, beispielsweise +29° bis -29°, +28° bis -28°, +27° bis -27°, +26° bis-26°, +25° bis -25°, +24° bis -24°, +23° bis -23°, +22° bis -22°, +21° bis -21°, +20° bis -20°, +19° bis -19°, +18° bis -18°, +17° bis -17°, +16° bis -16°, +15° bis -15°, +14° bis -14°, +13° bis -13°, +12° bis-12°, +11° bis -11 und +10° bis -10°.

Analoges gilt für die Winkelbereiche und Einzelwerte für z = 2, 4, 5 und 6.

Nach einer bevorzugten Ausführungsform werden zur Ermittlung der Kontur mindestens drei an dem zu vermessenden Rundprofil anliegende und das Rundprofil umschließende, ein Polygon bildende Schattenkanten erzeugt und vermessen und aus den erhaltenen Daten unter Verwendung mindestens eines Bezugskreises eine Kurve berechnet wird, welche die Kontur wiedergibt. Anschließend wird dann die Oberwelle berechnet.

Nach einer weiteren bevorzugten Ausführungsform wird bei dem erfindungsgemäßen Verfahren bestimmt, ob es sich bei dem Extremwert um ein Maximum oder Minimum handelt.

Mit diesen Informationen kann der Maschinenführer die Walzen besser steuern, um zu erreichen, dass der gewünschte Zustand, nämlich GT = DT und somit ein rundes Profil, erhalten wird.

Mit anderen Worten, bei dem erfindungsgemäßen Verfahren erhält und bestimmt man als Ergebnis die Amplitude und die Phase der Oberwelle. Sofern für z = 3 nur eine 3-Welligkeit vorliegt, entspricht die Amplitude der Unrundheit, während aus der Phase der Verdrehwinkel berechnet wird. In diesem Fall kann auch von einer 3-Welligkeit-Unrundheit gesprochen werden.

Sind mehrere Welligkeiten vorhanden, dann fällt die Gesamtunrundheit nicht mit dieser Amplitude zusammen. Vielmehr stellt die Gesamtunrundheit die Differenz zwischen Maximum und Minimum der Punkte der Kontur dar.

Das erfindungsgemäße Verfahren wird anhand der Zeichnungen sowie unter Bezug auf ein Walzgerüst mit mehreren hintereinander angeordneten 3-Walzenblöcken (d. h. z = 3) näher erläutert. In den Zeichnungen zeigen:
- Figur 1: die schematisch dargestellte Situation in einer Walzstraße mit mehreren 3-Walzenblöcken gemäß dem Stand der Technik im Falle einer Unterfüllung, wobei nur der letzte 3-Walzenblock graphisch gezeigt ist,
- Figur 2: die in der Figur 1 gezeigte Ansicht im Falle einer Überfüllung,
- Figur 3: das Profil einer dreiwelligen Kontur,
- Figur 4: eine erfindungsgemäß berechnete Oberwelle für die dreiwellige Kontur von Figur 3; der Verdrehwinkel beträgt 0°,
- Figur 5: eine erfindungsgemäß berechnete Oberwelle für eine dreiwellige Kontur; der Verdrehwinkel beträgt +15° und
- Figur 6: eine erfindungsgemäß berechnete Oberwelle für eine dreiwellige Form die von einer kleineren sechswelligen Form überlagert ist; der Verdrehwinkel beträgt -10°.

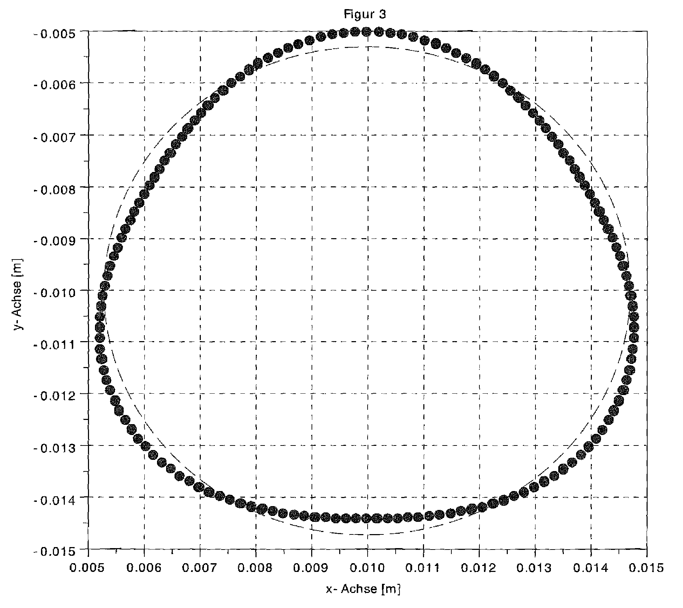

In der Fig. 3 ist die Kontur bzw. das Profil einer dreiwelligen Kontur durch Punkte gezeigt. Dabei wird angenommen dass die Kontur bezüglich einer Drehung von 120° symmetrisch ist.

Zudem ist ein Bezugskreis durch eine gestrichelte Linie gezeigt. Bei diesem Bezugskreis handelt es sich um den Kreis der kleinsten Quadraten Abweichungen. Zur Erläuterung eines derartigen Bezugskreises wird auf die eingangs erwähnten Druckschriften verwiesen.

Dieser Bezugskreis sowie die Kontur bzw. die Kurve, welche die Kontur wiedergegeben, stammen aus dem oben erwähnten bekannten Verfahren.

An dieser Stelle greift nun das erfindungsgemäße Verfahren ein.

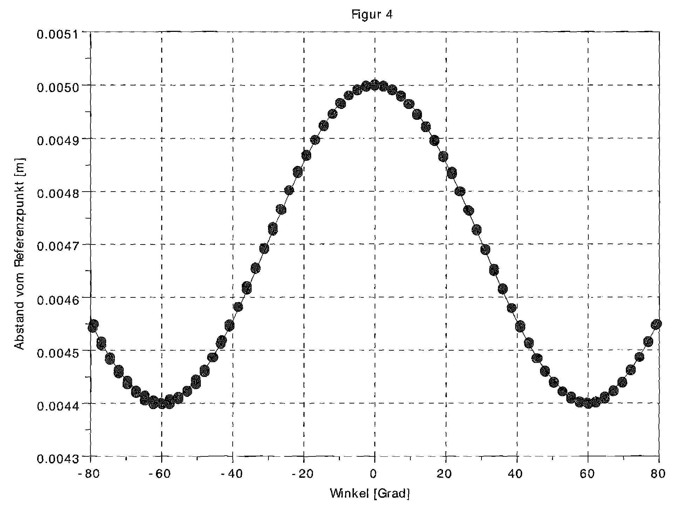

In den Figuren 4 bis 6 sind die vorhandenen Punkte der Kontur und die erfindungsgemäße Oberwelle mit einer durchgestrichenen Linie dargestellt. Die Oberwelle kann auch als rekonstruierte 3-Welligkeitskurve bezeichnet werden.

In einer ersten Stufe wird das Referenzzentrum X₀Y₀ bestimmt, sofern dieses Referenzzentrum nicht ebenfalls aus dem bekannten Verfahren bereits bekannt ist bzw. dadurch berechnet wurde. Es kann sich dabei um den Durchschnitt aller Punkte handeln. Es ist auch möglich, das Referenzzentrum als Mittelpunkt des Kreises mit den kleinsten Quadraten Abweichungen festzulegen oder als Mittelpunkt des größten Innenkreises oder als Mittelpunkt des kleinstes Umkreises festzulegen.

Die Werte GT und DT sind nur von Interesse, wenn sie unterschiedlich sind, denn nur dann liegt ein unrundes Produkt vor und nur dann muss eine Korrektur der Walzenstellung erfolgen.

Es muss daher festgestellt werden, ob in einem Winkelbereich (Suchbereich), bezogen auf eine vorgegeben Winkellage, eine Differenz von GT und DT vorhanden ist. Ist derartige Differenz vorhanden, dann führt dies zu einem Extremwert, beispielsweise ein Minimum oder ein Maximum. Handelt es sich um ein Maximum, dann liegt eine Unterfüllung vor. Bei einem Minimum ist eine Überfüllung gegeben.

Zu diesem Zweck wird beim erfindungsgemäßen Verfahren im Falle des hier erläuterten Falles nach der Oberwelle der 3-fachen Kreisfrequenz für die Kurve der Kontur gesucht. Diese Bestimmung kann nach bekannten Methoden und beispielsweise sowie vorzugsweise gemäß den Regeln der Fourieranalyse bzw. der Methode der kleinsten Quadraten Abweichungen erfolgen.

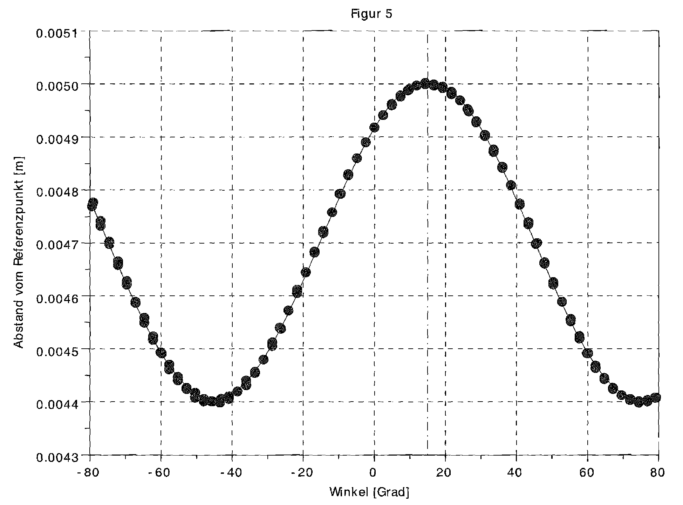

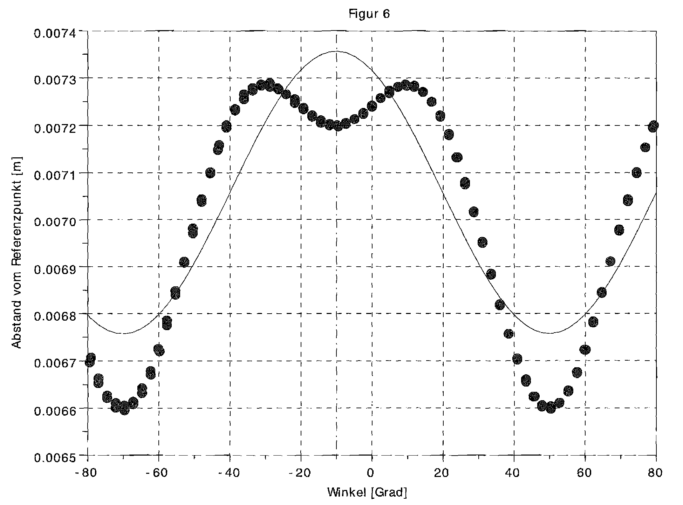

Im Falle einer dreiwelligen Kontur wird eine dreiwellige Sinuskurve der in den Figuren 5 und 6 gezeigten Art erhalten.

Danach wird in einem Winkelbereich von kleiner + 30° bis größer -30°, bezogen auf einen Winkellage von 0°, nach einem Extremwert der Oberwelle gesucht. Dieser Winkelbereich wird hier auch als Suchbereich bezeichnet.

Der Winkel von 0° bezieht sich dabei auf eine Winkellage, in der eine der Walzen des letzten Blocks angeordnet ist. Die 0°-Richtung zeigt somit zu dieser Walze hin, unabhängig wie die Ebene der Walze im Raum ausgerichtet ist.

Mit anderen Worten, es wird somit berechnet, ob in der Oberwelle in dem genannten Suchbereich ein Extremwert vorhanden ist.

Bei dem hier erläuterten 3-Walzen-Block sind die Walzen gleichmäßig auf einem Kreis verteilt angeordnet, was üblicherweise der Fall ist. Dann ist die erste Walze in 0° (bezogen auf den Kreis) angeordnet. Die Walzen des letzten Kalibers für die so vermessene Kontur befinden sich in 0°, 120° und 240°. Diese Winkellagen sind durch die Walzvorrichtung bzw. Walzanlage vorgegeben und somit bekannt.

Liegt die Ebene der ersten Walze des Blocks beispielsweise in der Senkrechten, dann liegt auch die 0°-Richtung in der Senkrechten. Ist die Ebene der ersten Walze jedoch in einem Winkel zur Senkrechten und somit "schräg im Raum" angeordnet, beispielsweise in einem Winkel von 10°, dann bildet auch die 0°-Richtung einen Winkel von 10° mit der Senkrechten. Es ist übrigens unerheblich, welche der drei Walzen in diesem Fall als erste Walze angesehen wird; diese Zuordnung ist rein willkürlich und dient nur der leichteren Verständlichkeit.

Nach Ermittlung eines Extremwertes der 3-Welligkeitskurve wird der Winkel zwischen der 0°-Richtung und dem Extremwert berechnet. Dieser Winkel wird hier als αₘₐₓ bezeichnet.

Bei dem hier untersuchten Rundprofil bzw. Objekt handelt es sich um ein 3-welliges Objekt. Zudem beträgt die Verdrehung 0°. Dann ergibt sich die in der Figur 4 gezeigte Kurve. Eine solche Kurve bzw. Oberwelle erhält man bei einer Kontur mit der in der Figur 3 gezeigten Form. Bei 0° befindet sich ein Extremwert in Form eine Maximums; dies bedeutet eine Unterfüllung. Der Verdrehwinkel αₘₐₓ beträgt 0°. Es liegt somit keine Verdrehung vor. Die Unrundheit beträgt in etwa 0,6 mm, dieser Wert ergibt sich aus dem Abstand zwischen den Maxima und den Minima der Kurven.

Handelt es sich bei dem untersuchten Rundprofil bzw. Objekt um ein 3-welliges Objekt und beträgt die Verdrehung beispielsweise + 15°, dann ergibt sich die in der Figur 5 gezeigte Kurve. Bei 15° befindet sich ein Extremwert in Form eine Maximums; dies bedeutet eine Unterfüllung. Der Verdrehwinkel αₘₐₓ beträgt 15°. Es liegt somit eine Verdrehung um 15° vor. Auch in diesem Fall beträgt die Unrundheit in etwa 0,6 mm.

Die Konturpunkte liegen häufig nicht auf einer sinusförmigen Kurve. Dieser Fall ist in der Figur 6 näher erläutert, Die dort gezeigte Situation kann sich ergeben, wenn eine dreiwellige Form von einer kleineren sechswelligen Form überlagert wird, welche durch die Walzen des vorletzten Gerüstes hervorgerufen wird.

In der Figur 6 werden die Konturpunkte angezeigt, während die rekonstruierte 3-Welligkeitskurve durch eine durchgezogene Linie wiedergegeben wird. In diesem Fall beträgt der Verdrehwinkel αₘₐₓ in etwa -10°, während die Unrundheit der 3-Welligkeit etwa 0,6 mm beträgt.

## Patentansprüche

1. Verfahren zur Bestimmung des Verdrehwinkels von in ihrer Längsrichtung vorbewegten Rundprofilen in einer Walzstraße, die mit einer Anzahl von z Walzen pro Walzenblock ausgestattet ist, wobei z für 2, 3, 4, 5 oder 6 steht, bezüglich der x-Achse oder y-Achse dieser Walzstrasse, bei dem eine Kontur des Rundprofils berechnet wird.
**dadurch gekennzeichnet, dass**
i) sofern noch nicht geschehen, ein Referenzzentrum x₀, y₀ für die Kurve der Kontur festgelegt wird,
ii) nach der Oberwelle der z-fachen Kreisfrequenz für die Kurve der Kontur gesucht und diese Oberwelle bestimmt wird,
iii) in einem Winkelbereich, bezogen auf eine vorgegebene 0° Winkellage, wobei als vorgegebene 0° Winkellage die Winkellage einer der Walzen des letzten Kalibers bzw. Walzenblocks gewählt wird und wobei der Winkelbereich
für die 2-fache Kreisfrequenz (z = 2) kleiner + 45° bis größer - 45°, für die 3-fache Kreisfrequenz (z = 3) kleiner + 30° bis größer - 30°, für die 4-fache Kreisfrequenz (z = 4) kleiner + 22,5° bis größer-22,5°,
für die 5-fache Kreisfrequenz (z = 5) kleiner + 18° bis größer - 18° und
für die 6-fache Kreisfrequenz (z = 6) kleiner + 15° bis größer - 15° beträgt,
nach einem Extremwert für die unter ii) berechnete Oberwelle gesucht wird und
iv) der Verdrehwinkel αₘₐₓ zwischen der Richtung vom Referenzzentrum zu dem Extremwert der Oberwelle und der 0° Winkellage berechnet wird.

2. Verfahren nach Anspruch 1,
**dadurch gekennzeichnet, dass**
z für 3 steht.

3. Verfahren nach Anspruch 2,
**dadurch gekennzeichnet, dass**
in der Stufe iii) der Winkelbereich + 20° bis - 20° beträgt.

4. Verfahren nach Anspruch 2,
**dadurch gekennzeichnet, dass**
in der Stufe iii) der Winkelbereich + 15° bis - 15° beträgt.

5. Verfahren nach einem der vorhergehenden Ansprüche,
**dadurch gekennzeichnet, dass**
zur Ermittlung der Kontur mindestens drei an dem zu vermessenden Rundprofil anliegende und das Rundprofil umschließende, ein Polygon bildende Schattenkanten erzeugt und vermessen und aus den erhaltenen Daten unter Verwendung mindestens eines Bezugskreises eine Kurve berechnet wird, welche die Kontur wiedergibt.

6. Verfahren nach einem der vorhergehenden Ansprüche,
**dadurch gekennzeichnet, dass**
bestimmt wird, ob es sich bei dem Extremwert um ein Maximum oder Minimum handelt.

7. Verfahren nach einem der vorhergehenden Ansprüche,
**dadurch gekennzeichnet, dass**
in der Stufe ii) die Oberwelle nach den Regeln der Fourieranalyse gesucht und bestimmt wird.

## Claims

1. A method for determining the rotational angle of round profiles advanced in their longitudinal direction in a rolling mill equipped with a number of z rollers per roller block, wherein z represents 2, 3, 4, 5 or 6, with respect to the x-axis or y-axis of said rolling mill, in which method a contour of the round profile is calculated,
**characterized in that**
i) if not done yet, a reference center x₀, y₀ is defined for the curve of the contour,
ii) the harmonic of the z-fold circular frequency for the curve of the contour is searched and said harmonic is determined,
iii) in an angular range relative to a given 0° angular position, wherein as the given 0° angular position the angular position of one of the rollers of the last caliber, respectively roller block is selected, and wherein the angular range
for the 2-fold circular frequency (z = 2) is less than + 45° to more than - 45°,
for the 3-fold circular frequency (z = 3) is less than + 30° to more than - 30°,
for the 4-fold circular frequency (z = 4) is less than + 22.5° to more than - 22.5°,
for the 5-fold circular frequency (z = 5) is less than + 18° to more than - 18°, and
for the 6-fold circular frequency (z = 6) is less than + 15° to more than - 15°,
an extreme value is searched for the harmonic calculated in ii), and
iv) the rotational angle αₘₐₓ between the direction from the reference center to the extreme value of the harmonic and the 0° angular position is calculated.

2. The method according to claim 1,
**characterized in that**
z represents 3.

3. The method according to claim 2,
**characterized in that**
in step iii), the angular range is + 20° to - 20°.

4. The method according to claim 2,
**characterized in that**
in step iii), the angular range is + 15° to - 15°.

5. The method according to any one of the preceding claims,
**characterized in that**
for obtaining said contour, at least three shadow edges adjacent the round profile and enclosing the round profile to be measured, and forming a polygon, are generated and measured, and from the obtained data, a curve reflecting the contour is calculated using at least one reference circle.

6. The method according to any one of the preceding claims,
**characterized in that**
a determination is made whether the extreme value is a maximum or a minimum.

7. The method according to any one of the preceding claims,
**characterized in that**
in step ii), the harmonic is searched and determined according to the Fourier analysis rules.

## Revendications

1. Procédé de détermination de l'angle de rotation de profilés ronds déplacés vers l'avant dans leur direction longitudinale dans un train de laminoir qui est équipé d'un nombre de z cylindres par bloc de cylindres, sachant que z représente 2, 3, 4, 5 ou 6, par rapport à l'axe x ou l'axe y de ce train de laminoir, dans lequel un contour du profilé rond est calculé,
**caractérisé en ce que**
i) dans la mesure où cela n'a pas encore été effectué, un centre de référence x₀, y₀ est défini pour la courbe du contour,
ii) l'harmonique de la fréquence angulaire multiple de z pour la courbe du contour est recherchée et cette harmonique est déterminée,
iii) dans une plage angulaire, rapportée à une position angulaire de 0° prédéfinie, sachant que la position angulaire d'un des cylindres de la dernière cannelure et/ou du dernier bloc de cylindres est choisie comme position angulaire de 0° prédéfinie et sachant que la plage angulaire est
plus petite que + 45° à plus grande que - 45° pour la double fréquence angulaire (z = 2),
plus petite que + 30° à plus grande que - 30° pour la triple fréquence angulaire (z = 3),
plus petite que + 22,5° à plus grande que - 22,5° pour la quadruple fréquence angulaire (z = 4),
plus petite que + 18° à plus grande que - 18° pour la quintuple fréquence angulaire (z = 5) et
plus petite que + 15° à plus grande que - 15° pour la sextuple fréquence angulaire (z = 6),
une valeur extrême pour l'harmonique calculée en ii) est recherchée et
iv) l'angle de rotation αₘₐₓ entre la direction allant du centre de référence à la valeur extrême de l'harmonique et la position angulaire de 0° est calculé.

2. Procédé selon la revendication 1,
**caractérisé en ce que**
z représente 3.

3. Procédé selon la revendication 2,
**caractérisé en ce que**
à l'étape iii), la plage angulaire est de + 20° à - 20°.

4. Procédé selon la revendication 2,
**caractérisé en ce que**
à l'étape iii), la plage angulaire est de + 15° à - 15°.

5. Procédé selon l'une des revendications précédentes,
**caractérisé en ce que**
pour la détermination du contour, au moins trois arêtes d'ombre se trouvant en contact avec le profilé rond à mesurer, entourant le profilé rond et formant un polygone, sont générées et mesurées et une courbe qui reproduit le contour est calculée à partir des données obtenues, moyennant l'utilisation d'au moins un cercle de référence.

6. Procédé selon l'une des revendications précédentes,
**caractérisé en ce que**
on détermine si la valeur extrême est un maximum ou un minimum.

7. Procédé selon l'une des revendications précédentes,
**caractérisé en ce que**
à l'étape ii), l'harmonique est recherchée et déterminée selon les règles de l'analyse de Fourier.
